# FASCICULE DE BREVET EUROPEEN

(11) **EP 0 356 285 B1**
(45) Date de publication et mention de la délivrance du brevet: **20.01.1993**
(21) Numéro de dépôt: 89402179.9
(22) Date de dépôt: 01.08.1989
(51) Int. Cl.: F16D 25/14, F16D 25/12

(54) **Dispositif de commande pneumatique d'embrayage**
Pneumatische Steuerungsvorrichtung für Kupplungen
Pneumatic clutch control device

(30) Priorité: 25.08.1988 FR 8811210
(43) Date de publication de la demande: 28.02.1990
(73) Titulaire: RENAULT VEHICULES INDUSTRIELS Société Anonyme dite:, 69003 Lyon (FR)
(72) Inventeur: Ellenberger, Gérard, F-69440 Mornant (FR)
(74) Mandataire: Chassagnon, Jean Alain

(56) Documents cités:
- EP-A- 0 173 625
- FR-A- 2 136 847
- FR-A- 2 552 835
- GB-A- 1 409 905
- US-A- 3 990 352
- US-A- 4 643 285
- US-A- 4 644 968

## Description

La présente invention se rapporte à un dispositif de commande pneumatique d'embrayage de véhicules automobiles, notamment pour les véhicules industriels.

Le système le plus répandu, surtout sur les petits véhicules est la commande sans assistance, où l'embrayage est relié à la pédale par une tringle, un câble ou une liaison hydraulique avec émetteur et récepteur. Sur les poids lourds, très fréquemment, la commande est assistée pneumatiquement, sur une liaison mécanique ou plus généralement hydraulique : c'est le servo-débrayage.

Ces différents systèmes présentent de nombreux inconvénients, notamment pour l'effort à la pédale, pour la progressivité et pour l'entretien.

L'effort à la pédale représente une proportion de l'effort de commande du mécanisme, mais il est augmenté lors de la manoeuvre de débrayage ou diminué lors de la manoeuvre d'embrayage de la somme de tous les frottements de chacun des constituants, ce qui donne un effort de débrayage important et une variation importante d'effort entre le débrayage et l'embrayage.

L'embrayage a trois modes d'utilisation : lors des changements de rapport, lors des démarrages et lorsqu'il n'est pas commandé.

Lors des changements de rapport, l'embrayage est manoeuvré en tout ou rien et il doit assurer avant tout une bonne désolidarisation entre le moteur et la boîte de vitesses afin de ne pas endommager les synchroniseurs. Aussi, le mécanisme est conçu pour que sa commande assure, par une course correcte, la "levée de plateau".

Lors des démarrages, l'embrayage en commandé "en extraction contrôlée de couple", c'est-à-dire que, pour assurer un démarrage progressif, le chauffeur dose le déplacement de la pédale d'embrayage afin de "faire patiner".

Dès lors on conçoit que plus la course de patinage est importante, plus l'embrayage sera jugé progressif. En dehors des phases de débrayage ou de changement de rapport, l'embrayage n'est pas commandé et son rôle principal est alors de transmettre le couple moteur vers la transmission (ou réciproquement), sans aucun patinage intempestif. Aussi l'embrayage présente-t-il, lorsqu'il n'est pas commandé, un couple nominal avant glissement, bien supérieur au couple moteur.

En résumé, la commande du mécanisme d'embrayage présente trois zones ayant chacune sa fonction :
. une course correspondant au "surtarage" de l'embrayage,
. une course "de patinage" qui est une course utile pour les démarrages,
. et une course "de levée de plateau" qui est nécessaire pour les changements de rapport.

Le problème des commandes actuelles est paradoxalement leur trop grande linéarité. Avec une commande linéaire, on reproduit à la pédale la même proportion de course de patinage par rapport à la course totale que celle du mécanisme. Or, avec les embrayages usuels, cette proportion est assez faible, ce qui donne une progressivité non idéale, à moins d'augmenter la course totale, au détriment du confort.

Enfin, les systèmes connus, comme les systèmes à liaison hydrauliques, présentent l'inconvénient de nécessiter un entretien suivi et de poser de délicats problèmes de purge.

Le but de la présente invention est de proposer un dispositif de commande pneumatique d'embrayage qui soit non linéaire afin d'augmenter la progressivité, tout en pouvant s'adapter aux mécanismes d'embrayages sans demander de modifications.

Selon un mode de réalisation de l'invention, le dispositif de commande pneumatique d'embrayage a une commande au pied par l'intermédiaire d'une pédale et un embrayage avec aux moins un disque.

Il comporte un détendeur pneumatique réglable du type 3/2 qui est commandé par ladite pédale d'embrayage, un Vérin pneumatique agissant sur le mécanisme d'embrayage et un circuit pneumatique. Ce circuit pneumatique comprend un canal d'alimentation en air comprimé du détendeur pneumatique et un canal d'alimentation du vérin pneumatique le reliant audit détendeur pneumatique, qui comporte un orifice de mise à l'atmosphère ; de manière que pour la position embrayée (pédale au repos) le canal d'alimentation du vérin pneumatique soit mis en communication avec l'orifice de mise à l'atmosphère, et qu'au cours du déplacement de la pédale d'embrayage le détendeur soit agencé pour établir la communication entre le canal d'alimentation du détendeur et le canal d'alimentation du vérin, de façon à obtenir une évolution de la pression d'alimentation du vérin qui suive une loi déterminée en fonction de la course de la pédale, ladite pression agissant sur le vérin qui est agencé de manière à obtenir le déplacement du mécanisme d'embrayage qui suive une loi déterminée en fonction de ladite pression.

Le dispositif de commande pneumatique d'embrayage selon l'invention présente ainsi l'avantage d'être plus doux car il a une faible hystérisis en effort. De plus, il est non linéaire ce qui améliore la progressivité et il ne demande pas d'entretien. Enfin, il peut s'adapter sans difficulté aux mécanismes d'embrayages qui n'ont pas à être modifiés.

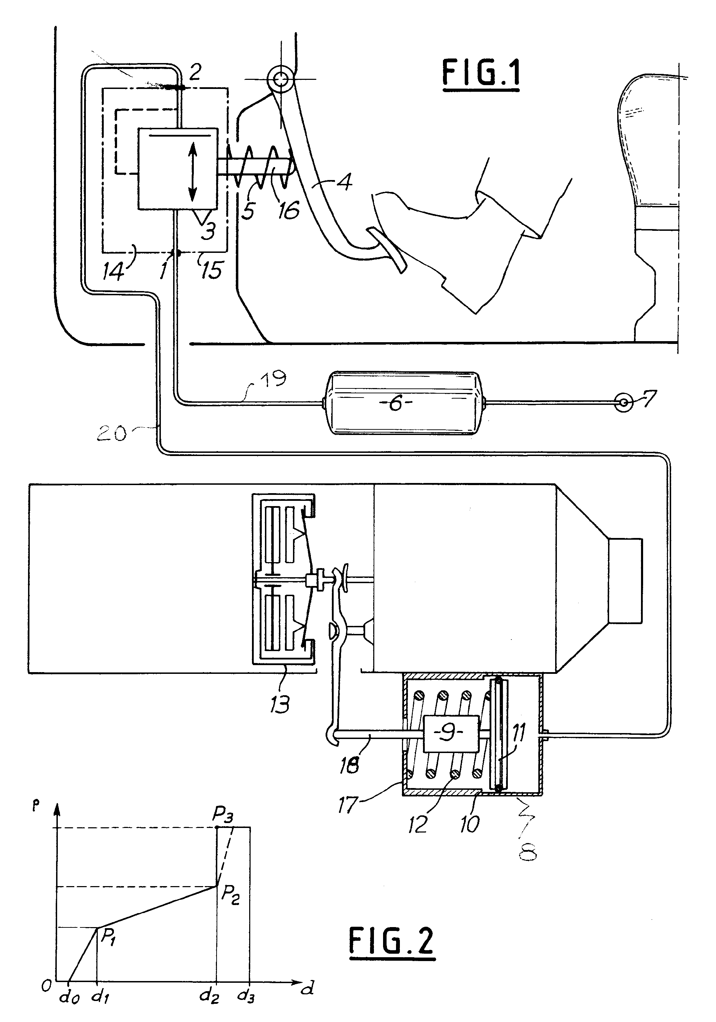

D'autres caractéristiques et avantages de la présente invention ressortitont de la description qui suit le mode de réalisation donné à titre d'exemple en référence aux dessins annexés sur lesquels :
- le figure 1 est une vue d'ensemble du dispositif de commande pneumatique d'embrayage selon l'invention,
- le figure 2 est une courbe d'évolution de la pression en fonction du déplacement de la pédale d'embrayage.

Le dispositif de commande pneumatique d'embrayage a une commande au pied par l'intermédiaire d'une pédale 4, un détendeur pneumatique 14, un vérin 8 pneumatique, un mécanisme d'embrayage 13 et un circuit pneumatique. Le circuit pneumatique a un réservoir 6 qui est relié au raccordement 7 à la source d'air comprimé.

Le détendeur pneumatique 14 est disposé sous la pédale 4 et il est commandé directement par ladite pédale 4. Le détendeur 14 est réglable et du type 3/2. L'actionneur pneumatique qui est le vérin 8, est disposé sur le carter d'embrayage et il agit sur la butée d'embrayage c'est-à-dire sur le mécanisme d'embrayage 13 par l'intermédiaire d'une commande interne.

Le circuit pneumatique comprend un canal 19, un canal 20 et un orifice 3. Le canal 19 d'alimentation du détendeur 14 est relié au réservoir 6 et débouche dans l'orifice d'entrée 1. Le canal 20 d'alimentation du vérin 8 débouche dans l'orifice de sortie 2 le reliant ainsi au détendeur pneumatique 14. Le détendeur pneumatique 14 comporte l'orifice 3 de mise à l'atmosphère. Pour la position embrayée c'est-à-dire lorsque la pédale 4 est au repos, le canal 20 d'alimentation du vérin 8 est mis en communication avec l'orifice 3 de mise à l'atmosphère par l'intermédiaire du détendeur 14.

Au cours du déplacement de la pédale 4 d'embrayage, le détendeur 14 est agencé de manière à établir la communication entre le canal 19 d'alimentation du détendeur 14 et le canal 20 d'alimentation du vérin 8 de façon à obtenir une évolution de la pression P d'alimentation du vérin 8 qui suive une loi déterminée en fonction de la course d de la pédale 4.

Cette pression P agit sur le vérin 8 qui est agencé de manière à obtenir un déplacement du mécanisme d'embrayage 13 qui suive une loi déterminée en fonction de ladite pression. Ainsi, selon l'invention, la commande se fait en effort en passant par une grandeur intermédiaire : la pression P.

Le détendeur pneumatique réglable 14, comporte un corps 15 dans lequel débouchent les orifices d'entrée 1, de sortie 2 de la mise à l'atmosphère 3. Un poussoir 16 est mobile dans le corps 15 et ses déplacements répondent à une commande par la pédale d'embrayage 4. Ce poussoir 16 peut isoler les orifices 1, 2 et 3.

Le poussoir 16 contient un clapet à commande d'isolation et de mise en communication des orifices d'entrée 1, de sortie 2 et de mise à l'atmosphère 3. Ce clapet est soumis à l'action d'un moyen suiveur des variations de la pression P de sortie, qui assure la mise à l'échappement du détendeur 14 par suite de l'accroissement de la pression P de sortie ou la communication des orifices 1 d'entrée et de sortie 2 par suite d'une chute de la pression P de sortie. Le moyen suiveur est constitué par un piston mobile interne à commande pneumatique équilibré par un système élastique 5.

La courbe représentant la loi d'évolution de la pression P d'alimentation du vérin 8 en fonction de la course de la pédale 4 comporte :
. une première phase de forte pente jusqu'à P1 pendant un petit déplacement de d0 à d1 de la pédale 4 qui correspondant au surtarage,
. une deuxième phase de faible pente de P1 à P2 pendant un grand déplacement de d1 à d2 de la pédale 4 qui correspond au patinage,
. une troisième phase de très forte pente de P2 à P3 pendant un déplacement extrèmement faible jusqu'à ce que la pression atteigne la pression d'alimentation du détendeur 14,
. une quatrième phase de pente nulle pendant un déplacement faible de d2 à d3.

Le système élastique 5 a une raideur qui évolue dans quatre zones :
. une première zone de valeurs fortes correspondant à la première phase,
. une deuxième zone de valeurs faibles correspondant à la deuxième phase,
. une troisième zone de valeurs très fortes correspondant à la troisième phase,
. une quatrième zone de valeur infinie correspondant à la quatrième phase.

La courbe représentant la loi d'évolution du déplacement du mécanisme d'embrayage 13 en fonction de la pression P est monotone croissante dans une première phase qui correspond au surtarrage, au patinage et à la levée de plateau et elle est ensuite à pente nulle ce qui correspond à la position en butée du piston du vérin pneumatique 8.

Le déplacement du mécanisme d'embrayage en fonction de la pression P, selon une loi déterminée décrite ci-dessus, est obtenue grâce au vérin pneumatique 8. Il comporte un piston 11 sur lequel agit l'air comprimé réglé par le détendeur 14. Un système élastique 12 est antagoniste à l'action de l'air comprimé et il est situé entre le piston 11 et le fond 17 du vérin. Le rôle du système élastique est de déterminer en fonction de l'effort résistant de l'embrayage la loi monotone croissante dont il a été question plus haut. Une butée 10 limite la course du piston 11 et une tige 18 qui est le système de liaison permet de déplacer le mécanisme d' embrayage 13. Un système 9 de rattrapage automatique de la course d' usure de l'embrayage fait la liaison entre la tige 18 et le piston 11. Cette liaison est rigide lorsque l'air comprimé agit sur le piston 11 et elle est coulissante lorsque le vérin 8 n'est plus alimenté en air comprimé, c'est-à-dire en position embrayée de l'embrayage 13 correspondant à la postion de repos de la pédale 4.

## Revendications

1. Dispositif de commande pneumatique d'embrayage ayant une commande au pied par l'intermédiaire d'une pédale (4) et un embrayage avec au moins un disque, caractérisé en ce qu'il comporte un détendeur pneumatique réglable (14) du type 3/2 commandé par ladite pédale (4) d'embrayage, un vérin (8) pneumatique agissant sur le mécanisme d'embrayage (13) et un circuit pneumatique avec un canal (19) d'alimentation en air comprimé du détendeur pneumatique (14) et un canal (20) d'alimentation du vérin (8) pneumatique le reliant audit détendeur pneumatique (14) qui comporte un orifice (3) de mise à l'atmosphère ; de manière que pour la position embrayée (pédale 4 au repos) le canal (20) d'alimentation du vérin (8) pneumatique soit mis en communication avec l'orifice (3) de mise à l'atmosphère et qu'au cours du déplacement de la pédale (4) d'embrayage le détendeur (14) soit agencé pour établir la communication entre le canal (19) d'alimenation du détendeur (14) et le canal (20) d'alimenation du vérin (8), de façon à obtenir une évolution de la pression d'alimentation du vérin (8) qui suive une loi déterminée en fonction de la course de la pédale (4) ; ladite pression agissant sur le vérin (8) qui est agencé de manière à obtenir un déplacement du mécanisme d'embrayage (13) qui suive une loi déterminée en fonction de ladite pression, telle que l'augmentation de celle-ci conduise au déplacement du mécanisme d'embrayage (13) vers sa position débrayée.

2. Dispositif de commande selon la revendication 1 caractérisé en ce que la courbe représentant la loi d'évolution de la pression d'alimentation du vérin (8) en fonction de la course de la pédale (4) comporte :
- une première phase de forte pente pendant un petit déplacement de la pédale (4) qui correspond au surtarage ,
- une deuxième phase de faible pente pendant un grand déplacement de la pédale (4) qui correspond au patinage,
- une troisième phase de très forte pente pendant un déplacement extrèmement faible jusqu'à ce que la pression atteigne la pression d'alimentation du détendeur qui correspond à la levée de plateau d'embrayage,
- une quatrième phase de pente nulle pendant une déplacement faible.

3. Dispositif de commande selon la revendication 2 caractérisé en ce que le détendeur pneumatique (14) comporte un système élastique qui a une raideur qui évolue dans quatre zones :
- une première zone de valeurs fortes correspondant à la première phase,
- une deuxième zone de valeurs faibles correspondant à la deuxième phase,
- une troisième zone de valeurs très fortes correspondant à la troisième phase,
- une quatrième zone de valeur infinie correspondant à la quatrième phase.

4. Dispositif de commande selon la revendication 1 caractérisé en ce que la courbe représentant la loi d'évolution du déplacement du mécanisme d'embrayage (13) en fonction de la pression est monotone croissante dans une première phase qui correspond au surtarage, au patinage et à la levée de plateau et est ensuite à pente nulle ce qui correspond à la position en butée du piston du vérin (8) pneumatique.

5. Dispositif de commande selon la revendication 1 caractérisé en ce que le détendeur pneumatique réglable (14) comporte un corps (15) dans lequel débouchent les orifices d'entrée (1), de sortie (2) de la mise à l'atmosphère (3) ; un poussoir (16) est mobile dans le corps (15) et ses déplacements répondent a une commande par la pédale d'embrayage (4) ledit poussoir (16) peut isoler les orifices (1), (2) et (3) et il contient un clapet a commande d'isolation et de mise en communication des orifices d'entrée (1) et de sortie (2) et de mise à l'atmosphère (3) ; ledit clapet est soumis à l'action d'un moyen suiveur des variations de la pression de sortie qui assure la mise à l'échappement du détendeur (14) par suite de l'accroissement de la pression P de sortie ou la communication des orifices d'entrée et de sortie par suite d'une chute de la pression P de sortie ; le moyen suiveur étant constitué par un piston mobile interne à commande pneumatique équilibré par un système élastique 5.

6. Dispositif de commande selon la revendication 1 caractérisé en ce que le vérin pneumatique (8) comporte un piston (11) sur lequel agit l'air comprimé réglé par le détendeur (14), un système élastique (12) antagoniste est situé entre le piston (11) et le fond (17) du vérin, une butée (10) limite la course du piston (11), une tige (18) (ou système de liaison) permettant de déplacer le mécanisme d'embrayage (13) ; un système (9) de rattrapage automatique de la course d'usure de embrayage, faisant la liaison entre la tige (18) et le piston (11), cette liaison étant rigide lorsque l'air comprimé agit sur le piston (11) et libre (coulissante) lorsque le vérin (8) n'est plus alimenté en air comprimé, c'est-à-dire en position embrayée du mécanisme d'embrayage (13) correspondant à la position de repos de la pédale (4).

## Patentansprüche

1. Pneumatische Steuerungsvorrichtung für Kupplungen, mit einer mittels eines Pedals (4) betätigbaren Fußsteuerung und mit einer mit wenigstens einer Scheibe versehenen Kupplung, dadurch gekennzeichnet, daß sie ein pneumatisches einstellbares Expansionsventil (14) vom 3/2-Wege-Typ aufweist, das durch das Kupplungspedal (4) gesteuert wird, einen pneumatischen Stellzylinder (8) aufweist, der auf dem Kupplungsmechanismus (13) wirkt sowie einen pneumatischen Kreislauf aufweist, mit einer Zufuhrleitung (19) für komprimierte Luft für das pneumatische Expansionsventil (14) und mit einer Zufuhrleitung (20) für den pneumatischen Stellzylinder (8), welche ihn mit dem pneumatischen Expansionsventil (14) verbindet, das eine Lüftungsöffnung (3) aufweist, so daß in der eingekuppelten Stellung (Pedal 4 in Ruhestellung) die Zufuhrleitung für den pneumatischen Stellzylinder (8) mit der Lüftungsöffnung (3) verbunden ist und während der Betätigung des Kupplungspedals (4) das Expansionsventil (14) wirksam wird, um die Verbindung zwischen der Zufuhrleitung (19) für das Expansionsventil (14) und der Zufuhrleitung (20) für den Stellzylinder (8) herzustellen, so daß eine Anpassung des Zufuhrdrucks des Stellzylinders (8) erfolgt gemäß einer vorgegebenen Gesetzmäßigkeit als Funktion des Pedalweges; der auf den Stellzylinder (8) wirkende Druck ist so bemessen, daß eine Betätigung des Kupplungsmechanismus (13) erfolgt, gemäß einer vorgegebenen Gesetzmäßigkeit als Funktion dieses Drucks, dergestalt, daß dessen Erhöhung zu einer Betätigung des Kupplungsmechanismus (13) in Richtung deren ausgekuppelter Stellung erfolgt.

2. Steuerungsvorrichtung nach Anspruch 1, dadurch gekennzeichnet, daß die die Anpassung des Versorgungsdrucks des Stellzylinders (8) darstellende Gesetzmäßigkeit als Funktion des Pedalweges (4) aufweist:
- eine erste Phase mit starkem Anstieg während einer geringen Verschiebung des Pedals (4) entsprechend der Momentübertragung,
- eine zweite Phase mit geringem Anstieg während einer großen Verschiebung des Pedals (4) entsprechend einem Durchrutschen,
- eine dritte Phase mit sehr starkem Anstieg während einer äußerst geringen Verschiebung bis der Druck den Versorgungsdruck des Expansionsventils erreicht, entsprechend einem Abheben der Kupplungsplatte,
- eine vierte Phase mit Anstieg 0 während einer geringen Verschiebung.

3. Steuerungsvorrichtung nach Anspruch 2, dadurch gekennzeichnet, daß das pneumatische Expansionsventil (14) eine Federanordnung aufweist mit einer Härte, die sich über vier Bereiche verteilt:
- einen ersten Bereich mit großen Werten entsprechend der ersten Phase,
- einen zweiten Bereich mit geringen Werten entsprechend der zweiten Phase,
- einen dritten Bereich mit sehr starken Werten entsprechend der dritten Phase und
- einen vierten Bereich mit dem Wert unendlich entsprechend der vierten Phase.

4. Steuerungsvorrichtung nach Anspruch 1, dadurch gekennzeichnet, daß die Gesetzmäßigkeit für die Verschiebung des Kupplungsmechanismus (13) als Funktion des Drucks gleichmäßig ansteigend ist in einer ersten Phase, entsprechend der Momentübertragung, dem Durchrutschen und dem beheben der Kupplungsplatte und anschließend die Steigung 0 aufweist, entsprechend der Anschlagstellung des Kolbens des pneumatischen Stellzylinders (8).

5. Steuerungsvorrichtung nach Anspruch 1, dadurch gekennzeichnet, daß das einstellbare pneumatische Expansionsventil (14) ein Teil (15) aufweist, in welchem die Einlaßöffnung (1), die Auslaßöffnung (2) und eine Lüftungsöffnung (3) für die Atmosphäre münden; ein Druckteil (16) ist beweglich im Teil (15) vorgesehen, wobei seine Verschiebungen durch das Kupplungspedal (4) gesteuert werden und es die Öffnungen (1, 2 und 3) verschließen kann, wobei es ein Steuerventil zum Verschließen und zum Öffnen der Einlaßöffnung (1), der Auslaßöffnung (2) und der Lüftungsöffnung (3) aufweist; dieses Ventil unterliegt der Wirkung einer Anordnung, die auf die Variationen des Auslaßdrucks reagiert und das Expansionsventil (14) entlüftet als Folge eines Anwachsens des Auslaßdrucks P oder einer Verbindung der Einlaßöffnung mit der Auslaßöffnung als Folge eines Abfalls des Auslaßdrucks P; diese Anordnung besteht aus einem beweglichen inneren pneumatisch gesteuerten Kolben, der durch eine Federanordnung (5) beaufschlagt wird.

6. Steuerungsvorrichtung nach Anspruch 1, dadurch gekennzeichnet, daß der Stellzylinder (8) einen Kolben (11) aufweist, auf dem die durch das Expansionsventil (14) gesteuerte komprimierte Luft wirkt, eine Federanordnung (12) aufweist, die dem entgegenwirkt und zwischen dem Kolben (11) und dem Boden (17) des Stellzylinders angeordnet ist, wobei ein Anschlag (10) den Weg des Kolbens (11) begrenzt, während eine Stange (18) (oder Verbindungsanordnung) eine Verschiebung des Kupplungsmechanismus (13) bewirkt; eine automatische Nachstellvorrichtung (9) für die Kupplungsabnutzung bildet eine Verbindung zwischen der Stange (18) und die Kolben (11), wobei diese Verbindung steif ist, wenn komprimierte Luft auf den Kolben (11) wirkt und frei ist (gleitend), wenn der Stellzylinder (8) nicht mehr mit komprimierter Luft beaufschlagt wird, d.h. sich in eingekuppelter Stellung des Kupplungsmechanismus (13) befindet, entsprechend der Ruhestellung des Pedals (4).

## Claims

1. A pneumatic clutch control arrangement having control with the foot by way of a pedal (4) and a clutch having at least one disc, characterised in that it comprises an adjustable pneumatic pressure-reducing member (14) of the 3/4 type which is controlled by said clutch pedal (4), a pneumatic jack (8) acting on the clutch mechanism (13) and a pneumatic circuit having a conduit (19) for the supply of compressed air to the pneumatic pressure-reducing member (14) and a conduit (20) for the supply to the pneumatic jack (8), connecting it to said pneumatic pressure-reducing member (14) which comprises an orifice (3) for communication with the atmosphere; in such a way that in the clutch engaged position (pedal 4 at rest) the supply conduit (20) for the pneumatic jack (8) is communicated with the orifice (3) for communication with the atmosphere and that in the course of displacement of the clutch pedal (4) the pressure-reducing member (14) is arranged to establish a communication between the supply conduit (19) for the pressure-reducing member (14) and the supply conduit (20) for the jack (8), so as to produce a variation in the supply pressure to the jack (8) which follows a given law in dependence on the travel motion of the pedal (4); said pressure acting on the jack (8) which is arranged so as to produce a displacement of the clutch mechanism (13) which follows a given law in dependence on said pressure, such that the increase in the latter results in displacement of the clutch mechanism (13) towards its clutch disengaged position.

2. A control arrangement according to claim 1 characterised in that the curve representing the law in respect of variation in the supply pressure for the jack (8) in dependence on the travel motion of the pedal (4) comprises:
- a first phase involving a sharp slope during a small displacement of the pedal (4) which corresponds to over-taring,
- a second phase with a shallow slope during a large displacement of the pedal (4) which corresponds to clutch slip,
- a third phase with a very sharp slope during an extremely short displacement until the pressure reaches the supply pressure for the pressure-reducing member, which corresponds to clutch plate lift-off, and
- a fourth phase involving zero slope during a short displacement.

3. A control arrangement according to claim 2 characterised in that the pneumatic pressure-reducing member (14) comprises a resilient system which is of a stiffness which varies in four zones:
- a first zone of high values corresponding to the first phase,
- a second zone of low values corresponding to the second phase,
- a third zone of very high values corresponding to the third phase, and
- a fourth zone of infinite value corresponding to the fourth phase.

4. A control arrangement according to claim 1 characterised in that the curve representing the law in respect of variation in the displacement of the clutch mechanism (13) in dependence on the pressure is monotonically rising in a first phase which corresponds to over-taring, slip and plate lift-off and it then involves zero slope, corresponding to the abutment position of the piston of the pneumatic jack (8).

5. A control arrangement according to claim 1 characterised in that the adjustable pneumatic pressure-reducing member (14) comprises a body (15) into which open the intake orifice (1), the outlet orifice (2) and the orifice (3) for communication with the atmosphere; a thrust member (16) is movable in the body (15) and its displacements respond to actuation by way of the clutch pedal (4) ; said thrust member (16) can isolate the orifices (1), (2) and (3) and it contains a valve for controlling isolation and communication of the intake orifice (1), the outlet orifice (2) and the orifice (3) for communication with the atmosphere; said valve is subjected to the action of a follower means for following the variations in the output pressure, which provides for exhausting of the pressure-reducing member (14) as a result of the increase in the output pressure P or communication of the intake and outlet orifices as a result of a drop in the output pressure P; the follower means being formed by an internal movable piston, involving pneumatic actuation, balanced by a resilient system (5).

6. A control arrangement according to claim 1 characterised in that the pneumatic jack (8) comprises a piston (11) on rich acts the compressed air which is regulated by the pressure-reducing member (14), a counteracting resilient system (12) is disposed between the piston (11) and the end portion (17) of the jack, an abutment (10) limits the travel movement of the piston (11), a rod (18) (or connecting system) providing for displacement of the clutch mechanism (13); a system (9) for automatically taking up the wear travel of the clutch, forming the connection between the rod (18) and the piston (11), said connection being rigid when the compressed air acts on the piston (11) and free (slidable) when the jack (8) is no longer supplied with compressed air, that is to say in the engaged position of the clutch mechaism (13), corresponding to the rest position of the pedal (4).
